**Europäisches Patentamt**

**European Patent Office**

**Office européen des brevets**

(19)

(11) Veröffentlichungsnummer : **0 099 022 B1**

(12) **EUROPÄISCHE PATENTSCHRIFT**

(45) Veröffentlichungstag der Patentschrift :
06.05.87

(51) Int. Cl.⁴ : **F 24 H  3/06, F 24 D  5/00,
F 24 H  3/12**

(21) Anmeldenummer : **83106269.0**

(22) Anmeldetag : **28.06.83**

(54) **Gerät zum Heizen von Einzelräumen.**

(30) Priorität : **15.07.82 DE 3226413**

(43) Veröffentlichungstag der Anmeldung :
**25.01.84 Patentblatt 84/04**

(45) Bekanntmachung des Hinweises auf die Patenterteilung : **06.05.87 Patentblatt 87/19**

(84) Benannte Vertragsstaaten :
**DE FR GB IT**

(56) Entgegenhaltungen :
**DE-A- 2 814 485
US-A- 3 006 613
US-A- 4 311 190**

(73) Patentinhaber : **ROBERT BOSCH GMBH
Postfach 50
D-7000 Stuttgart 1 (DE)**

(72) Erfinder : **Hornung, Alfred, Dipl.-Ing.
Erbacher Strasse 34
D-6650 Homburg/Saar (DE)**
Erfinder : **Kragl, Willi
Steinbeissstrasse 44
D-7016 Gerlingen (DE)**
Erfinder : **Scharf, Friedrich, Dr. Dipl.-Phys.
Amundsenstrasse 32
D-7000 Stuttgart 40 (DE)**

## Beschreibung

### Stand der Technik

Die Erfindung geht aus von einem Heizgerät nach dem ersten Teil von Patentanspruch 1. Bei einem bekannten Heizgerät dieser Gattung ist als Zusatzheizung eine elektrische Widerstandsheizung vorgesehen (US-A-4 311 190), während es auch bekannt ist, hierfür einen Nachtstrom-Feststoff-Kleinspeicher vorzusehen. Eine solche Zusatzheizung ist jedoch einem schnell wechselndem Wärmebedarf, wie er insbesondere bei Geräten der gattungsmäßigen Art auftreten kann, wegen ihres trägen Regelverhaltens nur unvollkommen anpassbar, sod daß sich verhältnismäßig hohe Systemverluste ergeben.

### Vorteile der Erfindung

Die erfindungsgemäße Anordnung mit den kennzeichnenden Merkmalen des Patentanspruchs 1 hat demgegenüber den Vorteil, daß die Wärmeleistung der Zusatzheizung dem wechselndem Wärmebedarf des zu beheizenden Raumes schnell anpassbar ist und daß die durch Auskühlung in den Betriebspausen entstehenden Systemverluste wesentlich geringer als bei der bekannten Zusatzheizung sind. Die Gaszusatzheizung hat außerdem eine höhere Primärenergieausbeute als die elektrische Widerstands- bzw. Speicherheizung und ferner trägt deren Ersatz auch zum Abbau der Strombelastungsspitzen bei, was in manchen Fällen den Einsatz von Geräten der gattungsmäßigen Art überhaupt erst ermöglicht. Durch den Einbau des von der Zusatzheizung beaufschlagten zweiten Wärmeübertragers in den Kondensator der Wärmepumpe ergibt sich eine kompakte Ausführung des Heizgeräts und der weitere Vorteil, daß für den zweiten Wärmeübertrager ein eigener Ventilator nicht benötigt wird. Der zweite Wärmeübertrager wird in Strömungsrichtung der Raumluft vorteilhaft stromab der Wärmeübertragungsflächen des Kältemittelkreislaufs im Kondensator angeordnet, so daß eine Rückwirkung auf das Kältemittel weitgehend vermieden ist.

Eine Wärmerückgewinnung aus den Abgasen der Zusatzheizung kann ohne Anordnung zusätzlicher Mittel dadurch erreicht werden, daß die ausgangsseitige Mündung des Abgasrohres an einer Stelle liegt, an welcher bei laufendem Ventilator eine zum Verdampfer gerichtete Außenluftströmung herrscht. Das Abgasrohr kann jedoch auch oder zusätzlich zu der vorstehend genannten Maßnahme über einen Wärmeübertrager geführt sein, der von einem am Wärmetransport beteiligten Fluid durchströmt ist. Dadurch läßt sich der rückgewinnbare Anteil der Abgaswärme z. B. auch an die dem Heizgerät zuströmende Raumluft übertragen. Gegebenenfalls kann das Abgasrohr auch über zwei Wärmeübertrager geführt sein, von denen der eine, stromaufliegende, in der Raumluftströmung und der andere in der Außenluftströmung liegt. Auch kann ein die Verbrennungsluft zum Gasbrenner leitendes Frischluftrohr durch einen Abgas-Wärmeübertrager geführt sein.

### Zeichnung

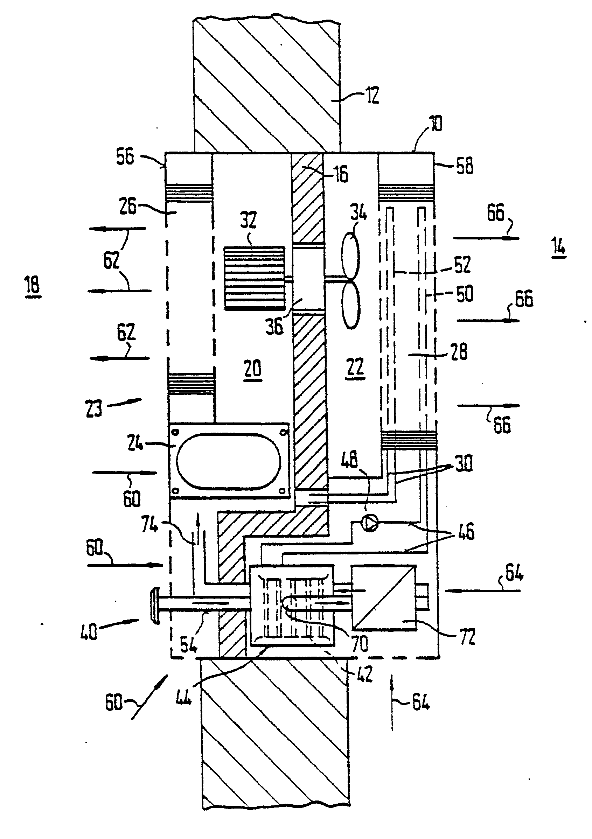

Ein Ausführungsbeispiel der Erfindung ist in der Zeichnung dargestellt und in der nachfolgenden Beschreibung näher erläutert. Die einzige Figur zeigt in schematischer Darstellung einen parallel zum Boden des zu beheizenden Raumes geführten Querschnitt durch das Ausführungsbeispiel.

Das Heizgerät hat einen Rahmen 10, der in einem Durchbruch in der Wand 12 eines zu beheizenden Raumes 14 eingesetzt ist. Im Rahmen 10 ist eine wärmeisolierende Zwischenwand 16 vorgesehen, welche das Rahmeninnere in einen der Außenumgebung 18 zugekehrten äußeren Bereich 20 und einen den Raum 14 zugekehrten inneren Bereich 22 teilt. In den Rahmen 10 ist ferner eine als Ganzes mit der Bezugszahl 23 bezeichnete Wärmepumpe eingebaut, deren Verdichter 24 und Verdampfer 26 im äußeren Bereich 20 und deren Kondensator 28 im inneren Bereich 22 des Rahmens angeordnet ist. Die einzelnen Aggregate der Wärmepumpe sind über einen Kältemittelkreislauf miteinander verbunden, der durch die Zwischenwand 16 hindurchgeführt und in der Zeichnung durch die beiden Rohrleitungen 30 versinnbildlicht ist. Dem Verdampfer 26 ist ein Ventilator 32 und dem Kondensator 28 ein Ventilator 34 zugeordnet, die beide gemeinsam von einem in der Zwischenwand 16 sitzenden Elektromotor 36 angetrieben werden.

Seitlich neben der Wärmepumpe 23 ist eine als Ganzes mit der Bezugszahl 40 bezeichnete gasbefeuerte Zusatzheizung in den Rahmen 10 eingebaut, welche parallel oder alternativ zur Wärmepumpe 23 einschaltbar ist. Die Zusatzheizung 40 hat einen rostförmigen Gasbrenner 42, über welchen sich ein Verbrennungsschacht bis zu einem ersten Wärmeübertrager 44 eines wärmeübertragenden Fluidkreislaufs 46 nach oben erstreckt. Dieser führt über eine kleine Umwälzpumpe 48 zu einem zweiten Übertrager 50, welcher in den Kondensator 28 der Wärmepumpe 23 baulich integriert ist. Die Anordnung ist so getroffen, daß der Wärmeübertrager 50 in Bezug auf die innere Raumluftströmung im Kondensator 28 stromab zu den Wärmeübertragungsflächen 52 des Kältemittelkreislaufs 30 angeordnet ist. Die Verbrennungsluft wird dem zusammen mit dem Wärmeübertrager 44 in einer Gehäusekapsel eingeschlossenen Gasbrenner 42 über ein Frischluftrohr 54 zugeführt, das sich durch ein Wandblech 56 hindurcherstreckt, welches die eine Stirnseite des Rahmens 10 nach außen abdeckt. Die andere Stirnseite des Rahmens 10 ist durch ein Wandblech 58 abgedeckt.

Die beiden Wandbleche 56, 58 und zum Teil der Rahmen 10 selbst sind mit perforierten Bereichen versehen, durch die hindurch Außen- und Raumluft in das Innere des Gerätes gelangen und aus diesen wieder austreten kann. Der Ventilator 32 ruft eine durch Pfeile 60, 62 angedeutete Strömung der Außenluft in dem Bereich 20 und durch den Verdampfer 26 hervor. Der Ventilator 34 ruft eine durch Pfeile 64, 66 angedeutete Strömung der Raumluft in dem Bereich 22 und durch den Kondensator 28 hervor. Die Wärmepumpe 23 arbeitet in der herkömmlichen Weise, so daß hierauf nicht näher eingegangen zu werden braucht.

Die den Gasbrenner 42 und den darüberliegenden Wärmeübertrager 44 umschließende Gehäusekapsel ist an ihrem oberen Ende an ein Abgasrohr 70 angeschlossen, welches durch einen Wärmeübertrager 72 führt, der im Bereich 22 das Rahmens 10 in der Raumluftströmung 64 angeordnet ist und zum Voraufwärmen der dem Kondensator 28 zugeführten Raumluft durch die Abgaswärme dient. Das Abgasrohr 70 ist stromab des Wärmeübertragers 72 in den äußeren Bereich 20 des Rahmens 10 zurückgeführt, wo sein oberhalb oder unterhalb des Verdichters 24 angeordnetes Mündungsende 74 im Bereich der Luftströmung 60 und gegen den Verdampfer 26 gerichtet ist. Das Abgas wird somit durch den Verdampfer 26 hindurchgeführt und die restliche Abgaswärme der Wärmepumpe zugeführt. Der Verdichter 24 selbst liegt ebenfalls in der Luftströmung 60, so daß auch seine Verlustwärme in den Wärmepumpenkreislauf gelangt.

### Patentansprüche

1. Gerät zum Heizen von Einzelräumen, mit einer Wärmepumpe (23), deren Aggregate, wie Verdichter (24), Kondensator (28), Expansionsventil und Verdampfer (26), zu einer fabrikseitig vormontierten Baueinheit zusammengefaßt sind, und ferner mit einer Zusatzheizquelle, welche in die Baueinheit der Wärmepumpe integriert und bei tiefen Außentemperaturen zusätzlich oder alternativ zur Wärmepumpe einschaltbar ist, dadurch gekennzeichnet, daß als Zusatzheizquelle ein Gasbrenner (42) vorgesehen ist, dem ein aus der Baueinheit nach außen herausführendes Abgasrohr (70, 74) zugeordnet ist, und daß zusätzlich zum Kältemittelkreislauf ein wärmeübertragender Fluidkreislauf (46) vorgesehen ist, der über einen vom Gasbrenner (42) beheizten ersten Wärmeübertrager (44) und einen die Wärme an die Raumluft abgebenden zweiten Wärmeübertrager (50) führt, welcher in den Kondensator (28) der Wärmepumpe (23) integriert ist.

2. Gerät nach Anspruch 1, dadurch gekennzeichnet, daß der Gasbrenner (42) und der erste Wärmeübertrager (44) gekapselt in einem Gehäuse angeordnet sind.

3. Gerät nach Anspruch 1 oder 2, mit einem dem Verdampfer zugeordneten Ventilator, dadurch gekennzeichnet, daß die ausgangsseitige Mündung des Abgasrohres (70, 74) an einer Stelle liegt, an welcher bei laufendem Ventilator (32) eine zum Verdampfer (26) gerichtete Außenluftströmung (60) herrscht.

4. Gerät nach einem der vorhergehenden Ansprüche, dadurch gekennzeichnet, daß das Abgasrohr (70, 74) über einen Wärmeübertrager (72) geführt ist, der von einem am Wärmetransport beteiligten Fluid durchströmt ist.

5. Gerät nach Anspruch 4, mit einem dem Verdampfer zugeordneten Ventilator, dadurch gekennzeichnet, daß der zur Rückgewinnung der Abgaswärme dienende Wärmeübertrager in der zum Verdampfer (26) gerichteten Außenluftströmung (60) liegt.

6. Gerät nach Anspruch 4, dadurch gekennzeichnet, daß der Wärmeübertrager (72) in der zum Kondensator (28) führenden Raumluftströmung (64) angeordnet ist.

7. Gerät nach den Ansprüchen 4 bis 6, dadurch gekennzeichnet, daß das Abgasrohr (70, 74) über zwei Wärmeübertrager geführt ist, von denen der eine, stromaufliegende, in der Raumluftströmung (64) und der andere in der Außenluftströmung (60) liegt.

8. Gerät nach einem der Ansprüche 4 bis 7, dadurch gekennzeichnet, daß ein zum Gasbrenner (42) führendes Frischluftrohr (54) über den Abgas-Wärmeübertrager führt.

### Claims

1. Appliance for heating individual rooms, with a heat pump (23), of which the units, such as the compressor (24), condenser (28), expansion valve and evaporator (26), are combined into a constructional unit preassembled at the factory, and also with an additional heating source which is integrated in the constructional unit of the heat pump and which can be switched on in addition to or alternatively to the heat pump at low outside temperatures, characterized in that the additional heating source is a gas burner (42), to which is assigned an exhaust-gas pipe (70, 74) leading outwards from the constructional unit, and in that there is, in addition to the refrigerant circuit, a heat-transmitting fluid circuit (46) which leads via a first heat exchanger (44) heated by the gas burner (42) and via a second heat exchanger (50) which transmits the heat to the room air and which is integrated in the condenser (28) of the heat pump (23).

2. Appliance according to Claim 1, characterized in that the gas burner (42) and the first heat exchanger (44) are encased in a housing.

3. Appliance according to Claim 1 or 2, with a fan assigned to the evaporator, characterized in that the mouth of the exhaust-gas pipe (70, 74) located on the outlet side is at a point where a flow of outside air (60) directed towards the evaporator (26) prevails when the fan (32) is running.

4. Appliance according to one of the preceding claims, characterized in that the exhaust-gas pipe (70, 74) is guided via a heat exchanger (72), through which flows a fluid participating in the heat transfer.

5. Appliance according to Claim 4, with a fan assigned to the evaporator, characterized in that the heat exchanger serving for recovering the exhaust-gas heat is located in the flow of outside air (60) directed towards the evaporator (26).

6. Appliance according to Claim 4, characterized in that the heat exchanger (72) is arranged in the room-air flow (64) leading to the condenser (28).

7. Appliance according to Claims 4 to 6, characterized in that the exhaust-gas pipe (70, 74) is guided via two heat exchangers, of which one located upstream is arranged in the room-air flow (64) and the other in the outside-air flow (60).

8. Appliance according to one of Claims 4 to 7, characterized in that a fresh-air pipe (54) leading to the gas burner (42) is guided via the exhaust-gas heat exchanger.

**Revendications**

1. Appareil pour le chauffage de locaux individuels, avec une pompe de chaleur (23), dont les équipements tels que le compresseur (24), le condensateur (28), la soupape d'expansion et l'évaporateur (26), sont rassemblés en une unité constitutive préalablement montée chez le fabricant et, en outre, avec une source de chauffage complémentaire, qui est intégrée dans l'unité constitutive de la pompe de chaleur et qui est susceptible d'être mise en circuit en complément à la pompe de chaleur ou bien en alternance avec elle dans le cas de basses températures extérieures, appareil caractérisé en ce qu'il est prévu en tant que source de chauffage complémentaire, un brûleur à gaz (42) auquel est associé un tube de gaz d'échappement (70, 74) partant de l'unité constitutive vers l'extérieur, tandis qu'il est prévu en plus du circuit du fluide frigorigène, un circuit de fluide caloporteur (46) qui passe par un premier échangeur thermique (44) chauffé par le brûleur à gaz (42) et par un deuxième échangeur thermique (50) fournissant la chaleur à l'air du local, et qui est intégré dans le condensateur (28) de la pompe de chaleur (23).

2. Appareil selon la revendication 1, caractérisé en ce que le brûleur à gaz (42) et le premier échangeur thermique (44) sont encapsulés dans un boîtier.

3. Appareil selon la revendication 1 ou 2, avec un ventilateur associé à l'évaporateur, appareil caractérisé en ce que le débouché côté sortie du tube des gaz d'échappement (70, 74) se situe à un emplacement où, lorsque le ventilateur (32) est en route, il règne un écoulement d'air extérieur (60) orienté vers l'évaporateur (26).

4. Appareil selon une des précédentes revendications, caractérisé en ce que le tube des gaz d'échappement (70, 74) passe par un échangeur thermique (72) qui est parcouru par un fluide participant au transport de chaleur.

5. Appareil selon la revendication 4, avec un ventilateur associé à l'évaporateur, appareil caractérisé en ce que l'échangeur de chaleur utilisé pour récupérer la chaleur des gaz d'échappement, se situe dans l'écoulement d'air extérieur (60) orienté vers l'évaporateur (26).

6. Appareil selon la revendication 4, caractérisé en ce que l'échangeur thermique (72) est disposé dans l'écoulement de l'air du local (64) aboutissant au condensateur (28).

7. Appareil selon les revendications 4 à 6, caractérisé en ce que le tube des gaz d'échappement (70, 74) passe par deux échangeurs thermiques, dont l'un placé en amont se trouve dans l'écoulement de l'air du local (64), tandis que l'autre se trouve dans l'écoulement de l'air extérieur (60).

8. Appareil selon une des revendications 4 à 7, caractérisé en ce qu'un tube d'air frais (54) aboutissant au brûleur à gaz (42) passe par l'échangeur de chaleur des gaz d'échappement.